# EUROPÄISCHE PATENTANMELDUNG

(11) **EP 0 827 846 A1**
(43) Veröffentlichungstag der Anmeldung: **11.03.1998**
(21) Anmeldenummer: 97115213.7
(22) Anmeldetag: 03.09.1997
(51) Int. Cl.: B60D 1/14, B60D 1/62, B60Q 11/00

(54) **Anhängerkupplung für Kraftfahrzeuge**

(30) Priorität: 05.09.1996 DE 29615490 U
(71) Anmelder: AL-KO KOBER AG, D-89359 Kötz (DE)
(72) Erfinder: Kober, Kurt, 89359 Kötz (DE); Herrmann, Gerhard, 89350 Dürrlauingen (DE)
(74) Vertreter: Ernicke, Hans-Dieter, Dipl.-Ing.

(57) **Zusammenfassung**

Die Erfindung betrifft eine Anhängerkupplung (1) für Kraftfahrzeuge, die als fahrzeugspezifischer und vorkonfektionierter kompletter Bausatz für den Eigeneinbau des Endkunden ausgebildet ist. Der Bausatz (2) umfaßt das Kupplungsorgan (4) mit einer angepaßten Tragkonstruktion (3), fahrzeugspezifische Montagemittel (5) und einen ebenfalls fahrzeugspezifischen vorkonfektionierten Elektrosatz (9). Die Montagemittel (9) beinhalten Beschläge (6), Werkzeug (7) und Behandlungsmittel, insbesondere Korrosionsschutzmittel. Die Anhängerkupplung kann komplett im Heckbereich des Fahrzeuges ohne aufwendige Einbau-und Umbaumaßnahmen montiert werden.

## Beschreibung

Die Erfindung betrifft eine Anhängerkupplung für Kraftfahrzeuge mit den Merkmalen im Oberbegriff des Hauptanspruchs.

Anhängerkupplungen für Kraftfahrzeuge werden in der Praxis von Fachwerkstätten geliefert und montiert. Sie bestehen aus dem Kupplungsorgan mit einer Tragkonstruktion, die vom Kupplungshersteller bezogen werden und aus einem Elektrosatz, den die Fachwerkstatt vom Fahrzeughersteller bezieht bzw. selbst aus Einzelteilen zusammenstellt. Die Kosten für die Anhängerkupplung und deren Montage sind dementsprechend hoch.

Es ist daher Aufgabe der vorliegenden Erfindung, eine kostengünstigere Anhängerkupplung aufzuzeigen.

Die Erfindung löst diese Aufgabe mit den Merkmalen im Hauptanspruch.
Die erfindungsgemäße Anhängerkupplung ist als Bausatz für den Eigeneinbau konfektioniert. Dieser Bausatz stellt vorzugsweise eine Kompletteinheit dar, die außer den eigentlichen Kupplungsteilen auch einen kompletten vorkonfektionierten Elektrosatz und die für die Eigenmontage erforderlichen speziellen Montagemittel umfaßt. Damit kann der Endkunde ohne fachspezifische Hilfe die Anhängerkupplung selbst montieren. Der Bausatz kann auf kostengünstigen Vertriebswegen, wie z.B. über Heimwerker- oder Verbrauchenmärkte, den Autoteilhandel oder dergleichen vertrieben werden. Die Anhängerkupplung ist dadurch besonders kostengünstig sowie montage- und kundenfreundlich.

Die erfindungsgemäße Ausbildung des vorkonfektionierten Elektrosatzes erlaubt es, den Elektroanschluß ohne tiefergehende Eingriffe in das Bordnetz oder gar den Austausch von Bordleitungen oder Schaltelementen zu schaffen. Der Elektrosatz wird anschlußfertig geliefert und kann auch vom Laien installiert werden. Besonders vorteilhaft ist dabei die Bereitstellung eines eigenen Signalgebers zur Blinkerkontrolle, so daß auch kein Zugriff auf die Instrumententafel des Fahrzeugs erforderlich ist. Die Montage kann ohne aufwendige Einbau- und Umbaumaßnahmen komplett im Heckbereich des Fahrzeugs erfolgen.

In den Unteransprüchen sind weitere vorteilhafte Gestaltungen der Erfindung angegeben.

Die Erfindung ist in den Zeichnungen beispielsweise und schematisch dargestellt. Im einzelnen zeigen:
- Figur 1:: die zum Bausatz gehörige Tragkonstruktion mit Kupplungsorgan und Montagemitteln;
- Figur 2:: den Elektrosatz im Schemaaufbau und

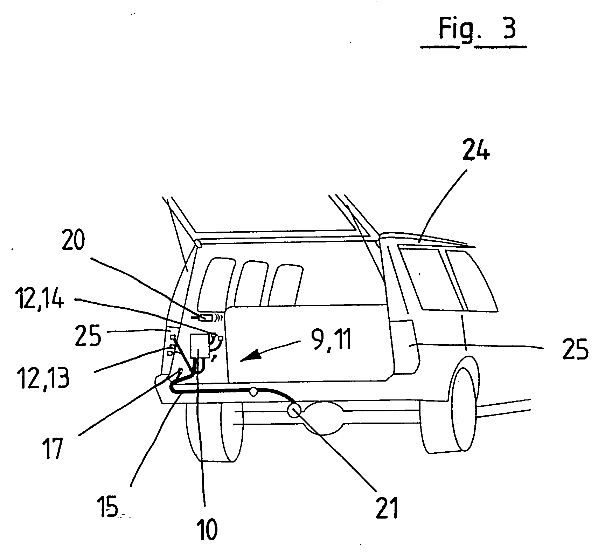

- Figur 3:: die Montagelage am Fahrzeugheck.

Die in den Zeichnungen in Einzelteilen dargestellte Anhängerkupplung (1) ist als vorkonfektionierter und für den Eigeneinbau des Endkunden vorbereiteter Bausatz (2) ausgebildet. Der nachfolgend im einzelnen beschriebene Bausatz (2) wird in einer Verpackung (nicht dargestellt), z.B. in einem Karton, komplett geliefert. Er kann vom Endkunden, d.h. von einem Heimwerker oder Hobbybastler, ohne besondere technische und elektrotechnische Kenntnisse am Fahrzeug (24) montiert und angeschlossen werden.

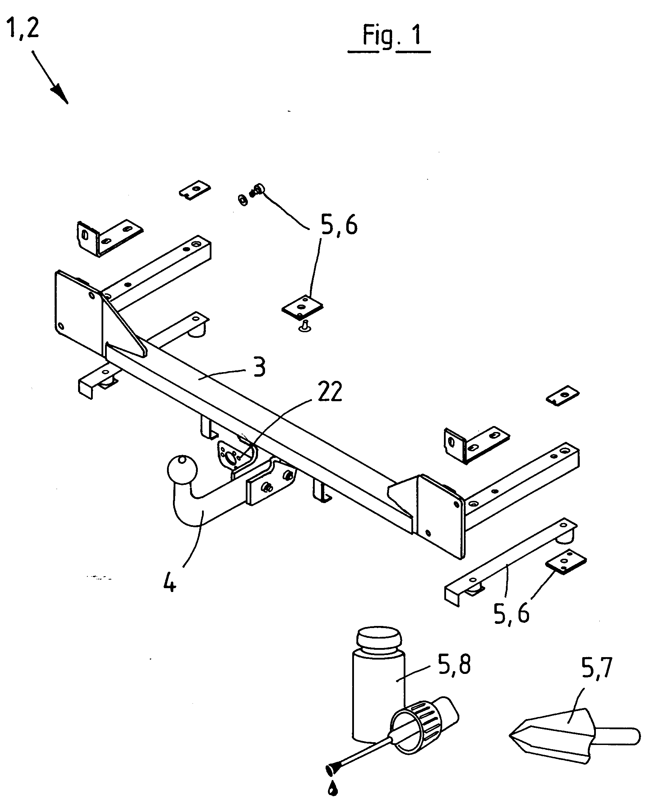

Der Bausatz (2) besteht aus einer in Figur 1 näher dargestellten Tragkonstruktion (3) mit dem Kupplungsorgan, verschiedenen Montagemitteln (5) und dem in Figur (2) dargestellten Elektrosatz (9). Der Elektrosatz (9) besteht im wesentlichen aus einem elektronischen Steuergerät (10) mit einem Leitungssatz (11), einem Signalgeber (20) und der Kupplungssteckdose (21). Der Bausatz (2) ist fahrzeugspezifisch ausgebildet und entsprechend vorkonfektioniert.

Wie Figur 1 an einem Beispiel verdeutlicht, besteht die fahrzeugspezifische Tragkonstruktion (3) z.B. aus dem Querträger und zwei endseitigen Längsträgern, die mit der Karosserie verbunden werden. Am Querträger ist das Kupplungsorgan (4), d.h. der Kupplungshals mit Kupplungskugel sowie gegebenenfalls ein Steckdosenhalter (22) befestigt.

Die Montagemittel (5) umfassen einerseits verschiedene Beschläge (6), die z.B. aus Montageplatten, Anschlußwinkeln oder dergleichen bestehen können. Dazu gehören ferner die passenden Befestigungsmittel, z.B. Schrauben oder dergleichen. Diese Montagemittel (5) sind auf den jeweiligen Fahrzeugtyp adaptiert.

Die Montagemittel (5) umfassen ferner ein oder mehrere Werkzeuge (7). Dies können insbesondere spezielle Bohr- und/oder Schneidwerkzeuge sein. Figur 1 zeigt beispielsweise einen Schälbohrer, mit dem die für die Kupplungsmontage benötigten Durchgangsbohrungen mit einem üblichen Durchmesser von ca. 25mm gebohrt werden können. Darüber hinaus kann das Werkzeug noch die passenden Schraubenträger, Schraubenschlüssel oder Steckschlüsseleinsätze und einen Drehmomentenschlüssel umfassen. Weiteres benötigtes Werkzeug, wie Hammer, Maßband oder dergleichen, kann ebenfalls zum Lieferumfang gehören. Die letztgenannten Teile können aber auch weggelassen werden, weil sie meist im Werkzeugbestand der Heimwerker zu finden sind. Der Schälbohrer gehört vorzugsweise zum Lieferumfang, weil er weniger üblich und verbreitet ist.

Die Montagemittel (5) können ferner noch ein oder mehrere Behandlungsmittel (8) umfassen. Dies ist z.B. ein flüssiges oder pastöses Korrosionsschutzmittel. Behandlungsmittel (8) können auch Fette, Öle, Kleber oder dergleichen sein.

Zu den Montagemitteln (5) zählen ferner eine geeignete aussagekräftige Bedienungsanleitung mit einer in Einzelbildern dargestellten Montagefolge und ausführlicher Anleitung. Dazu gehört auch eine Betriebsanleitung, ein Stützlastschild und gegebenenfalls eine Schutzkappe für die Kupplungskugel. Außerdem können ein oder mehrere fahrzeugspezifische Schablonen zur Vereinfachung der Montage, zum Anbringen von Bohrungen oder dergleichen beigelegt sein. Für die TÜV-Abnahme kann ferner eine Anbaubestätigung vorhanden sein.

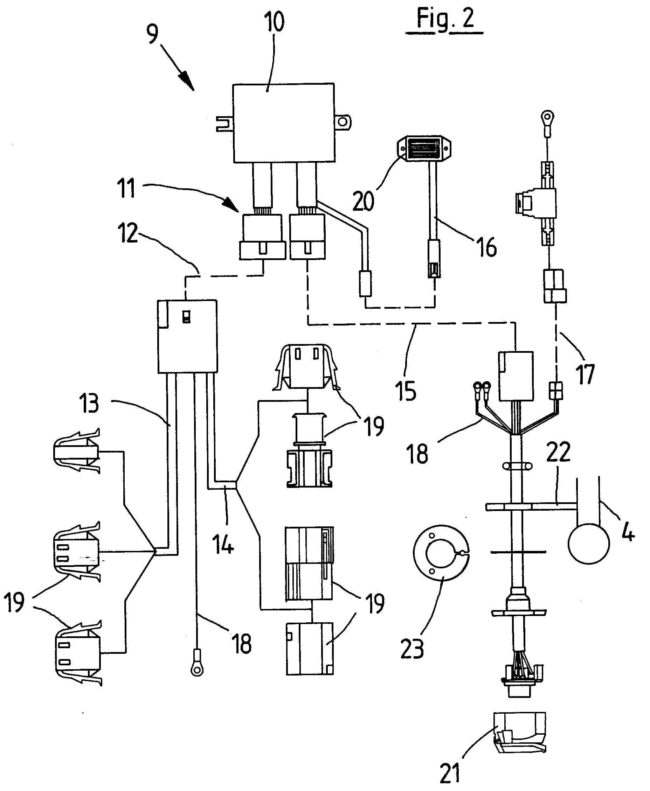

Der in Figur 2 näher dargestellte fahrzeugspezifische Elektrosatz (9) ist zum einfachen Eigeneinbau im Fahrzeugheckbereich ausgebildet und bedarf keiner größeren Einbau- und Umbaumaßnahmen am Fahrzeug. Insbesondere ist keine Verlegung von Leitungen durch das Fahrzeug bis zur Batterie oder zur Konsole im Frontbereich erforderlich.

Der Elektrosatz (9) beinhaltet einen mit dem Steuergerät (10) verbundenen und einbaufertig vorbereiteten Leitungssatz (11). Dieser besteht zum einen aus einem Kabelbaum (12) mit zwei oder mehr Kabelsträngen (13,14) und einer Masseleitung (18). Die Kabelaufteilung kann über einen kleinen Verteilerkasten erfolgen. Über den Kabelbaum (12) wird das Steuergerät (10) an das Bordnetz des Fahrzeugs (24) angeschlossen. Der Kabelstrang (13) wird mit seinen Einzelleitungen vorzugsweise an der Heckleuchte (25) des Fahrzeugs (24) angeschlossen. Die einzelnen Leitungen weisen hierzu an den Enden vorbereitete und fahrzeugspezifisch passende Steckverbinder (19) auf, z.B. Klemmstecker oder dergleichen. Diese können an der Kontaktplatte der Heckleuchte (25) in entsprechende Steckplätze eingesteckt werden. Der Kabelstrang (14) wird mit seinen zwei Einzelleitungen in die fahrzeugseitigen Bordnetzleitungen zwischen vorhandene Steckverbinder am Seitenblech im Heckbereich angesteckt. Die Verbinder (19) sind dazu als entsprechende linke und rechte Steckelemente ausgebildet. In das eine Steckelement wird die abgeklemmte Fahrzeugleitung (nicht dargestellt) eingesteckt und das andere Steckelement am Anschlußpunkt am Fahrzeug (24) eingesteckt.

Der fahrzeugspezifische Kabelbaum (12) kann mit dem Steuergerät (10) fest oder steckbar verbunden sein. Über den Kabelbaum (12) erfolgt die Strom- und Signalversorgung der Anhängerkupplung (1). Dabei werden Leuchtenstrom und Blinkersignal abgegriffen und mit dem Steuergerät (10) auch auf korrekte Funktion überwacht. Dabei kann auch die Nebelleuchten-Umschaltung bei Anhängerbetrieb erfolgen. Das Steuergerät (10) entspricht in seiner Ausbildung und Funktion dem aus dem DE-G 94 11 671 bekannten Gerät.

Ausgangsseitig ist das Steuergerät (10) mit dem Signalgeber (20) über eine Signalgeberleitung (16) verbunden. Der Signalgeber (20) arbeitet vorzugsweise akustisch und ist z.B. als Hupe ausgebildet. Er dient der Blinker bzw. Leuchtenkontrolle. Bei korrekt angekuppeltem und angeschlossenem Anhänger sowie funktionierender Blinkleuchten gibt das Gerät im Blinkrhythmus Signal. Der Ausfall von ein oder mehreren Anhänger- bzw. Fahrzeugleuchten kann ebenfalls signalisiert werden. Der Signalgeber (20) wird genauso wie das Steuergerät (10) im Heckbereich des Fahrzeugs (24), vorzugsweise an der Seitenwand, montiert. Hierfür sind ebenfalls geeignete Montagemittel beigelegt.

Ausgangsseitig ist an das Steuergerät (10) ferner noch ein Steckdosenkabelbaum (15) angeschlossen. Dieser umfaßt ebenfalls einen Verteilerkasten, aus dem die zur Kupplungssteckdose (21) führenden Leitungen oder ein oder mehrere Masseleitungen (18) abgezweigt werden. Am Steckdosenkabelbaum (15) kann eine Montageplatte und eine Verstärkungsplatte (23) zur Befestigung am Steckdosenhalter (22) angeordnet sein. Der Steckdosenkabelbaum (15) kann genauso wie die Signalgeberleitung (16) fest oder steckbar mit dem Steuergerät (10) verbunden sein. Vom Steuergerät (10) bzw. vom Steckdosenkabelbaum (15) kann ferner noch eine Zusatzleitung (17) abzweigen. Diese ist dem Bausatz (2) lose beigelegt und kann bei Bedarf durch das Fahrzeug (24) verlegt und mit dem Pluspol der Batterie (nicht dargestellt) verbunden werden. Die Zusatzleitung beinhaltet eine Sicherung und gegebenenfalls einen Steckerkontakt für eine zusätzliche Ladeleitung. Die Zusatzleitung (7) dient bei Bedarf, z.B. bei Caravan-Betrieb, als Dauerplusleitung zur Batterie. Hierüber kann der Anhänger dauerhaft an die Fahrzeugbatterie angeschlossen werden. Die Zusatzleitung kann auch im Bausatz weggelassen werden.

Der Leitungssatz (11) kann ferner noch Dichtungsmittel, z.B. Gummitüllen oder dergleichen, aufweisen, die zur sicheren Führung und Abdichtung an den Karosseriebohrungen Verwendung finden. Dazu können ferner geeignete Verlege- und Befestigungsmittel gehören.

Der vorbeschriebene Bausatz (2) kann in verschiedener Weise variiert werden. Dies kann z.B. durch Weglassen einzelner Teile geschehen, um einen unterschiedlichen Einbaukomfort und ein gestaffeltes Preisgefüge bieten zu können. Die einzelnen Teile des Bausatzes (2) sind vorzugsweise nach einem Baukastensystem konfektioniert, wobei soweit als möglich einheitliche Standardteile zum Einsatz kommen und die fahrzeugspezifischen Teile durch lösbare Verbindungen anschließbar sind. Der Bausatz (2) kann komplett zusammengesteckt und vormontiert werden oder in mehreren leicht montierbaren Einzelteilen oder Baugruppen vorliegen.

### BEZUGSZEICHENLISTE

- 1: Anhängerkupplung
- 2: Bausatz
- 3: Tragkonstruktion
- 4: Kupplungsorgan
- 5: Montagemittel
- 6: Beschlag, Befestigungsmittel
- 7: Werkzeug
- 8: Behandlungsmittel, Korrosionsschutz
- 9: Elektrosatz
- 10: Steuergerät
- 11: Leitungssatz
- 12: fahrzeugspezifischer Kabelbaum
- 13: Kabelstrang
- 14: Kabelstrang
- 15: Steckdosenkabelbaum
- 16: Signalgeberleitung
- 17: Zusatzleitung
- 18: Masseleitung
- 19: Verbinder
- 20: Signalgeber, Hupe
- 21: Kupplungssteckdose
- 22: Steckdosenhalter
- 23: Verstärkungsplatte
- 24: Fahrzeug
- 25: Heckleuchte

## Patentansprüche

1. Anhängerkupplung für Kraftfahrzeuge, dadurch **gekennzeichnet**, daß die Anhängerkupplung (1) als Bausatz (2) für den Eigeneinbau konfektioniert ist, der das Kupplungsorgan (4) mit einer Tragkonstruktion (3), Montagemittel (5) und einen vorkonfektionierten Elektrosatz (9) umfaßt.

2. Anhängerkupplung nach Anspruch 1, dadurch **gekennzeichnet**, daß die Montagemittel (5) Beschläge (6), Werkzeug (7) und Behandlungsmittel, insbesondere Mittel zu Korrosionsschutz, umfassen.

3. Anhängerkupplung nach Anspruch 2, dadurch **gekennzeichnet**, daß das Werkzeug (7) ein Bohr- und/oder Schneidwerkzeug beinhaltet.

4. Anhängerkupplung nach Anspruch 1, 2 oder 3, dadurch **gekennzeichnet**, daß der Elektrosatz (9) eine Kupplungssteckdose (21), ein Steuergerät (10) und einen einbaufertig vorbereiteten Leitungssatz (11) zur Verbindung mit der fahrzeugseitigen Stromversorgung im Heckbereich aufweist.

5. Anhängerkupplung nach Anspruch 1 oder einem der folgenden, dadurch **gekennzeichnet**, daß der Elektrosatz (9) einen vorzugsweise akkustischen Signalgeber (20) aufweist.

6. Anhängerkupplung nach Anspruch 1 oder einem der folgenden, dadurch **gekennzeichnet**, daß der Leitungssatz (11) einen mit dem Steuergerät (10) verbundenen fahrzeugspezifischen Kabelbaum (12) zur Strom- und Signaleinspeisung mit mehreren Kabelsträngen (13,14) und vorbereiteten Verbindern (19) zum Anschluß an die Heckleuchte(n) (25) und die Fahrzeugleitung(en) aufweist.

7. Anhängerkupplung nach Anspruch 1 oder einem der folgenden, dadurch **gekennzeichnet**, daß der Leitungssatz (11) einen mit dem Steuergerät (10) verbundenen Steckdosenkabelbaum (15) und eine Signalgeberleitung (16) aufweist.

8. Anhängerkupplung nach Anspruch 1 oder einem der folgenden, dadurch **gekennzeichnet**, daß der Leitungssatz (11) eine mit dem Steuergerät (10) verbundene Zusatzleitung (17) zum Anschluß an die Fahrzeugbatterie aufweist.
